# EUROPÄISCHE PATENTSCHRIFT

(11) **EP 1 175 255 B1**
(45) Veröffentlichungstag und Bekanntmachung des Hinweises auf die Patenterteilung: **09.04.2003**
(21) Anmeldenummer: 00934973.9
(22) Anmeldetag: 28.04.2000
(51) Int. Cl.: B01F 5/10

(54) **VERFAHREN UND VORRICHTUNG ZUR BEHANDLUNG VON IN EINEM BEHÄLTER, INSBESONDERE DURCH MISCH- ODER RÜHRVORGÄNGE, IN ROTATION UM DIE BEHÄLTERACHSE BEFINDLICHEM STOFF ODER STOFFGEMISCH**
METHOD AND DEVICE FOR PROCESSING A SUBSTANCE OR SUBSTANCE MIXTURE WHICH IS SITUATED IN A CONTAINER AND ROTATES ABOUT THE CONTAINER AXIS, NOTABLY BECAUSE OF A MIXING OR STIRRING ACTION
PROCEDE ET DISPOSITIF POUR LE TRAITEMENT D'UNE MATIERE OU D'UN MELANGE DE MATIERES SE TROUVANT DANS UN RECIPIENT, EN PARTICULIER PAR MELANGE OU AGITATION, EN ROTATION AUTOUR DE L'AXE DU RECIPIENT

(30) Priorität: 30.04.1999 DE 19919859
(43) Veröffentlichungstag der Anmeldung: 30.01.2002
(73) Patentinhaber: Slowik, Günter, 06217 Merseburg (DE)
(72) Erfinder: Slowik, Günter, 06217 Merseburg (DE)
(74) Vertreter: Tragsdorf, Bodo, Dipl.-Ing.
(86) Internationale Anmeldenummer: EP0003876
(87) Internationale Veröffentlichungsnummer: WO00066255

(56) Entgegenhaltungen:
- EP-A- 0 619 135
- WO-A-81/03143
- WO-A-91/07262
- DE-B- 1 082 790
- GB-A- 2 101 493
- US-A- 3 704 865
- US-A- 4 460 276
- US-A- 4 534 654
- US-A- 4 830 505
- PATENT ABSTRACTS OF JAPAN vol. 1998, no. 10, 31. August 1998 (1998-08-31) & JP 10 113551 A (KURARAY CO LTD), 6. Mai 1998 (1998-05-06)
- PATENT ABSTRACTS OF JAPAN vol. 0072, no. 52, 9. November 1983 (1983-11-09) & JP 58 137435 A (MITSUBISHI DENKI KK), 15. August 1983 (1983-08-15)

## Beschreibung

Die Erfindung betrifft ein Verfahren zur Behandlung von in einem Behälter, insbesondere durch Misch- oder Rührvorgänge in Rotation um die Behälterachse, befindlichem Stoff oder Stoffgemisch.

Im Allgemeinen und in der Verfahrenstechnik ist das Mischen ein Stoffverteilungsprozeß, bei dem zwei oder mehrere Stoffe in einen Zustand möglichst vollkommener Gleichverteilung überführt werden, durch Umwälzvorgänge der zu vermischenden Stoffkomponenten. In der Praxis finden in vielen Industriezweigen Mischverfahren statt, bei denen in große Flüssigkeitsmengen andere feste, flüssige oder gasförmige Komponenten gleichmäßig verteilt werden sollen.
Solche Vorgängen laufen in Rührwerken, Reaktoren, Kristallisatoren, Abwasserbecken, Rauchgaswäschern, Fermentern und vielen anderen Apparaten ab. Die Vermischung der Komponenten ist dabei häufig mit weiteren Energie- und Stoffaustauschvorgängen gekoppelt, wie z.B. physikalischen Vorgängen oder chemischen Reaktionen. Diese Technologien sind in der chemischen Industrie, der Grundstoffindustrie, der Aufbereitungstechnik, der Biotechnologie, der Nahrungsmittelindustrie und in vielen weiteren Industriezweigen zu finden. Da bei diesen Vorgängen große Flüssigkeitsmengen mit entsprechendem Energieaufwand zu bewegen sind, kommt der effizienten Gestaltung der Prozess- und Apparatetechnik eine besondere Bedeutung zu. Der Mischvorgang erfolgt in überwiegendem Maße durch den Eintrag mechanischer Energie, z.B. durch Rührer, die in einer Vielzahl von Bauarten angeboten werden. Der wichtigste Qualitätsparameter beim Mischen ist die erzielte Mischgüte. Von weiterer Bedeutung für die Effizienz des Mischverfahrens sind der erforderliche Energieeintrag sowie die Mischzeit. Bei bestimmten Mischprozessen, die einen erhöhten Energieeintrag erfordern, ist der Einbau zusätzlicher Strombrecher erforderlich. Eine Vielzahl an Mischprozessen erfordert aufgrund der stofflichen Beschaffenheit der Komponenten einen schonenden Energieeintrag, wobei jedoch die erforderliche Mischwirkung gewährleistet sein muß. Bei Mischvorgängen bei denen chemische Reaktionen, als exotherme oder endotherme Reaktion ablaufen, spielt die Effektivität der Wärmeübertragung eine weitere wesentliche Rolle. Die aus der Praxis bekannten Lösungen zur Temperierung der Misch- oder Rührbehälter erfordern einen hohen Kostenaufwand und sind in ihrer Wirksamkeit abhängig von der Wärmeleitfähigkeit des Mischgutes. Da sich in einem industriellen Misch- und Rührbehälter relativ große Mengen an Mischgut befinden, ergeben sich für Mischgüter mit einer geringen Wärmeleitfähigkeit erhebliche Probleme bei einer erforderlichen äußeren Wärmezuführung oder-abführung.
Aus der WO 81/03143 A und der US-PS 4,460,276 sind jeweils ein Verfahren zur Behandlung von in einem Behälter, insbesondere durch Misch- oder Rührvorgänge, in Rotation um die Behälterachse befindlichem fluiden Stoff oder Stoffgemisch mit festen oder fluiden Stoffen, bekannt, wobei im Behälter befindliche Stoffe in Richtung ihrer tangentialen Geschwindigkeitskomponente an einer Stelle am Außenumfang des Behälters aus diesem abgeführt und im Kreislauf an einer anderen Stelle des Behälters in einer Strömungsrichtung, die nicht der Tangentialgeschwindigkeitskomponente der im Behälter befindlichen Stoffe an der Zuführungsstelle entgegengesetzt gerichtet ist, in diesen zurückgeführt werden. Zum Transport der im Kreislauf geführten Stoffe werden jeweils eine Pumpe eingesetzt.

Der Erfindung liegt die Aufgabe zugrunde, ein Verfahren zur Behandlung von in einem Behälter, insbesondere durch Misch- oder Rührvorgänge, in Rotation um die Behälterachse befindlichem Stoff oder Stoffgemisch zu schaffen, das eine Behandlung des fluiden Stoffes bzw. des Mischgutes ermöglicht und durch das der erforderliche Energieeintrag ohne nachteilige Auswirkungen auf die Mischgüte verringert werden kann.
Ferner ist es Aufgabe, eine zur Durchführung des Verfahrens geeignete Vorrichtung zu schaffen.

Erfindungsgemäß wird die Aufgabe durch die im Anspruch 1 angegebene Verfahrensweise gelöst. Geeignete Ausgestaltungen des Verfahrens sind in den Ansprüchen 2 bis 9 angegeben. Eine zur Durchführung des Verfahrens geeignete Vorrichtung ist Gegenstand des Anspruches 10. Geeignete Ausgestaltungsvarianten zu der Vorrichtung sind in den Ansprüchen 11 bis 15 angegeben.

Die erfindungsgemäße Lösung basiert auf den Überlegungen, die, insbesondere beim Misch- und Rührprozeß auftretende, tangentiale Geschwindigkeitskomponente des Mischgutes auszunutzen, um das Mischgut im Kreislauf aus dem Behälter abzuführen und an anderer Stelle des Behälters wieder in diesen zurückzuführen. Eine Teilstrommenge des Mischgutes oder eine Mischgutkomponente kann dadurch teilweise oder vollständig ausgekreist werden und während der Führung im Kreislauf einer speziellen Behandlung unterzogen werden. Als Kreislauf im Sinne der Erfindung ist die Wegstrecke des Mischgutes außerhalb des Behälters zu verstehen.
Um die Aufrechterhaltung des Kreislaufbetriebes zu gewährleisten ist es selbstverständlich, daß im Betriebszustand im Behälter eine ausreichende Füllstandshöhe einzuhalten ist. Vorzugsweise sollte sich die Eintritts- bzw. Rückführungsstelle für die im Kreislauf geführte Stoffmenge unterhalb des Flüssigkeitsspiegels befinden.
Die einfachste Ausgestaltung einer Vorrichtung zur Durchführung des erfindungsgemäßen Verfahrens ist die Anordnung einer tangential von der Behälterwand nach außen wegführenden Leitung, die als äußere Umlaufleitung bis an die gewünschte Stelle des Behälters geführt wird. An dieser wird die Leitung so in der Behälterwand angeordnet, daß die Mittelachse der Leitung die gleiche Richtung wie die Tangentialgeschwindigkeitskomponente des im Behälter rotierenden Mischgutes oder eine zu dieser leicht geneigte Richtung aufweist. Die Abweichung im Neigungswinkel von der Mittelachse kann dabei bis zu 45° betragen. Damit wird praktisch die gesamte Staudruckdifferenz, als Triebkraft für einen äußeren Stoffkreislauf wirksam. Die Höhendifferenz der Ein- und Austrittsöffnungen im Behälter sind dabei nicht von Bedeutung, da nur die Druckverluste infolge der Strömungsbewegung als Energie aufzubringen sind.
Mit dieser Maßnahme wird ein Kreislauf ohne Pumpe oder andere zusätzlich eingebrachte Triebkräfte außerhalb des Behälters ermöglicht. Bei technisch auftretenden Tangentialgeschwindigkeiten von einigen m/s an der Behälterwand wird deutlich, daß damit eine ausreichende Druckdifferenz vorhanden ist, um größere Volumina in diesem äußeren Kreislauf bewegen zu können. Bei unbewehrten Behältern ist in erster Näherung die Tangentialgeschwindigkeit keine Funktion der Behälterhöhe, da sich praktisch ein Starrkörperwirbel ausbildet, der ab einer bestimmten Radiuskoordinate zur Behälterwand abklingt. Bei einem Behälterdurchmesser von 3 m und einem Blattrührer von 1,5 m Durchmesser sowie einer Rührerdrehzahl von 90 min⁻¹ entsteht eine Tangentialgeschwindigkeit von mehr als 11 m·s⁻¹ (Stoffwerte von Wasser). Dies entspricht einem Staudruckunterschied im Sinne der beschriebenen Maßnahmen von 67 kPa. Der Bedarf an Druckdifferenz für den äußeren Kreislauf ist jedoch gering. Installiert man eine Leitung von 5 m Länge und 40 cm Durchmesser als Kreislaufleitung, die mit einer mittleren Geschwindigkeit von 3 m·s⁻¹ durchströmt wird, so ist dabei ein Druckabfall von etwa 6 kPa zu verzeichnen. Das macht deutlich, daß bei den gegebenen Verhältnissen noch genügend Reserve, z.B. für die Anordnung eines Wärmeübertragers besteht. Bei großen Behältern reicht bei entsprechender Dimensionierung die Staudruckdifferenz aus, um genügend große Strömungsgeschwindigkeiten im Wärmeübertrager hervorzurufen, die zu ausreichenden k-Zahlen führen.
Die Mischung im Inneren des Behälters kann durch zwei Mechanismen beeinflußt werden. Zum einen liegt die übliche Mischwirkung durch das Misch- oder Rührorgan vor. Als zusätzliche Vorgang kommt die Strahlmischung durch den im Kreislauf geführten und in den Behälter eingeleiteten Fluidstrahl hinzu. Für die Einleitung gibt es nur die Bedingung, daß die Strömungsrichtung nicht der Tangentialgeschwindigkeitskomponente entgegen gerichtet sein darf. Sie kann beispielsweise radial zur Achse des Behälters ausgerichtet sein und zusätzlich von der Horizontalen abweichen. Dadurch ergeben sich eine Vielzahl von Möglichkeiten für die Praxis.
Die Führung der Kreislaufmenge muß aber keineswegs immer von unten nach oben erfolgen. So kann es sinnvoll sein, bei der Mischung von Flüssigkeit mit Materialien, die aufschwimmen, eine Förderrichtung von oben nach unten zu wählen. Das Gut wird an der Oberfläche der Flüssigkeit erfaßt und durch die Leitung nach unten getragen. Das Gleiche gilt für die Zumischung von Gas. Bei geeigneter Geschwindigkeit in der Leitung, kann das Gas im oberen Teil der Leitung zugegeben werden, worauf es durch die Flüssigkeit mit nach unten gezogen wird. Das Gas steht dabei intensiver und länger mit der Flüssigkeit in Kontakt, als wenn es nur am Boden eingeleitet wird, was auch höhere Energiekosten verursacht, da auf einen höheren Druck komprimiert werden muß. Es kann auch sinnvoll sein, beide Richtungen miteinander zu kombinieren, indem zum Gaseintrag die Förderrichtung von oben nach unten, und für die Suspendierung die entgegengesetzte Richtung parallel betrieben wird.
In dem Kreislauf zwischen der Abführungsstelle und der Zuführungsstelle können z.B. zusätzliche Wärme- und Stoffübertragungsvorgänge stattfinden. In der Kreislaufleitung werden dann die dazu erforderlichen Einbauten vorgenommen, die in ihrer konstruktiven Ausgestaltung an sich bekannt sind.
Als bekannte Einbauten können z.B. statische Mischer und Wärmeübertrager, eingesetzt werden. Weitere technische Veränderungen, die im Rahmen der Erfindung in der Kreislaufleitung vorgenommen werden können, sind vorzugsweise folgende: Zumischen von Komponenten, Durchführung von Klassierungen oder spezielle Sonderbehandlungen.
So kann beispielsweise die Ultraschallbeeinflussung einer Flüssigkeit im Kreislaufstrom veranlaßt werden. Die Messung von Stoff- und Betriebsparametern (Temperatur, Konzentration) ist ebenfalls möglich. Der Behälter kann mit mehreren tangentialen Stutzen und den dazugehörigen Kreislaufleitungen ausgestattet werden. Damit wird eine wahlweise Zu- bzw. Abschaltung mehrerer Kreisläufe möglich. Dadurch können z.B. im laufenden Betrieb verschmutzte Wärmeübertrager zur Reinigung außer Betrieb genommen werden, während der andere Kreislauf in Betrieb bleibt. Bei verschmutzten Rohrschlangen im Innern eines Rührbehälters müßte der Prozeß abgefahren werden.
Durch mehrere Kreisläufe kann aber auch auf unterschiedliche Prozeßanforderungen reagiert werden, wie auf unterschiedliche Füllstände oder sich ändernde Stoffwerte.
Die erfindungsgemäße Lösung ist für eine Vielzahl von Aufgaben, insbesondere auf dem Gebiet der chemischen Verfahrenstechnik, geeignet, wie z.B. Wärmezufuhr oder Wärmeeintrag (für Kristallisationsvorgänge oder chemische Reaktionen), Einspeisung von Gas (Entnahme oben, Einspeisung unten), Suspendieren (Entnahme unten, Einspeisung oben), Zumischen von weiteren Stoffen, Messung stofflicher oder verfahrenstechnischer Parameter, Entnahme eines Teilstromes, Klassierung eines entnommenen Teilstromes und Homogenisierung von Stoffen in großen und hohen Behältern.
Wie bereits erwähnt, kann die erforderliche Rotationsbewegung des im Behälter befindlichen Stoffes durch die rotierenden Rühr- oder Mischorgane erzeugt werden, wie das z.B. bei Batch-Prozessen der Fall ist.
In den Anwendungsfällen, wo der Einsatz von Misch- oder Rührorganen nicht erforderlich ist, kann die Rotationsbewegung des im Behälter befindlichen Stoffes auch durch die zusätzliche Einleitung eines fluiden Stoffes erzeugt werden. So können z.B. ein Gas oder eine während des Prozesses verdampfende Flüssigkeit eingeleitet werden, die eine ausreichende Rotationsbewegung des im Behälter befindlichen Stoffes bewirken. Ist eine Verdampfung der Flüssigkeit nicht gewünscht, so sollte zumindest ein definierter Stoffstrom kontinuierlich wieder abgeführt werden, nach dem
Zu- und Ablauf-Prinzip. Die erwünschte Rotationsbewegung wird bevorzugt durch eine tangentiale Einleitung des Flüssigkeitsstromes erreicht.
Die Eintrittsenergie der Flüssigkeit muß in diesem Fall die Reibungsverluste der Strömung im Apparat und über den äußeren Kreislauf ausgleichen. Sie kann durch die zugeführte Menge und durch die Eintrittsquerschnittsfläche festgelegt und variiert werden, indem mindestens zwei Zuführungskanäle für den zugeführten Flüssigkeitsstrom verwendet werden. Der Gesamtflüssigkeitsstrom ist dann auf beide Zuführungskanäle aufzuteilen. Der Eingangsimpuls kann somit zwischen zwei Grenzwerten geregelt werden. Der niedrigste Energieimpuls wird erreicht, wenn mit der gesamten Eintrittsmenge alle Zuführungskanäle beaufschlagt werden. Der größte Eingangsimpuls wird erreicht, wenn der Zuführungskanal mit dem kleinsten Querschnitt beaufschlagt wird. Zur Erzielung eines möglichst großen Regelbereiches ist es sinnvoll, die Querschnitte der Zuführungskanäle ungleich groß zu gestalten, oder mehr als zwei Zuführungskanäle gleichzeitig zu bedienen. Auf diese Weise kann auf die Rotationsbewegung bei gleichbleibendem Zufluß in der Prozeßstufe Einfluß genommen oder aber die Rotation bei schwankendem Zufluß aufrechterhalten werden. Die Entnahme bzw. Abführung der Flüssigkeit kann im Bereich des Behälterrandes vorgenommen werden. Die separate Zuführung eines fluiden Stoffstromes zur Erzeugung der erforderlichen Rotationsbewegung des im Behälter befindlichen Stoffes unterscheidet sich in ihrer Wirksamkeit nicht von dem Einsatz von Rühr- oder Mischorganen. Selbstverständlich können diese beiden alternativen Maßnahmen auch kombiniert eingesetzt werden, z.B. in solchen Anwendungsfällen, wo nur schonende Rührbewegungen erwünscht sind, die nicht ausreichen, um die erforderliche Rotationsbewegung des Mischgutes zu gewährleisten.
Hinsichtlich der stofflichen Beschaffenheit ist das Verfahren für fluide Stoffe oder Stoffgemische mit festen oder fluiden Stoffen geeignet. Weniger geeignet ist das Verfahren für Stoffe oder Stoffgemische, die ausschließlich aus festen Stoffen großer Korngrößen bestehen oder eine hohe Viskosität aufweisen.
Die vorgeschlagene Lösung ermöglicht eine schonendere Behandlung der jeweiligen Stoffe, führt zu einer besseren Mischwirkung und damit zu einer höheren Mischgüte. Außerdem lassen sich bei bestimmten Prozessen die Mischzeiten verkürzen, ohne nachteilige Auswirkungen auf die Mischgüte. Von erheblichem Vorteil ist auch, daß der erforderliche Stofftransport außerhalb des Behälters, also im Kreislauf, keinen zusätzlichen Energieeintrag erfordert. Die Energiebilanz für diverse Misch- und Rührprozesse kann dadurch wesentlich günstiger gestaltet werden und führt zu einer Reduzierung der Kosten.
Einen weiteren Vorteil bilden die verschiedenen verfahrenstechnischen Kombinationsmöglichkeiten, die einen universellen Einsatz der Erfindung ermöglichen. Die an den jeweiligen Behältern erforderlichen Umbauten bzw. Ausrüstungen zur Realisierung der neuen Verfahrensweise verursachen nur relativ geringe Kosten.

Die Erfindung soll nachstehend näher erläutert werden. In der zugehörigen Zeichnung zeigen
- Fig. 1: einen Rührbehälter in vereinfachter perspektivischer Darstellung,
- Fig. 2: den Rührbehälter gemäß Fig. 1 als Halbschnitt, in einer um die zentrale Achse gedrehten Position,
- Fig. 3: die Draufsicht auf den Rührbehälter gemäß Figur 2,
- Fig. 4: die schematische Darstellung eines Rührbehälters für einen Kreislaufbetrieb von oben nach unten,
- Fig. 5: die schematische Darstellung eines Rührbehälters mit einem im Kreislauf integrierten Wärmeübertrager für eine Verdampfungskristallisation und
- Fig. 6: ein Funktionsschema für eine weitere Ausgestaltungsvariante mit mehreren Kreislaufleitungen.

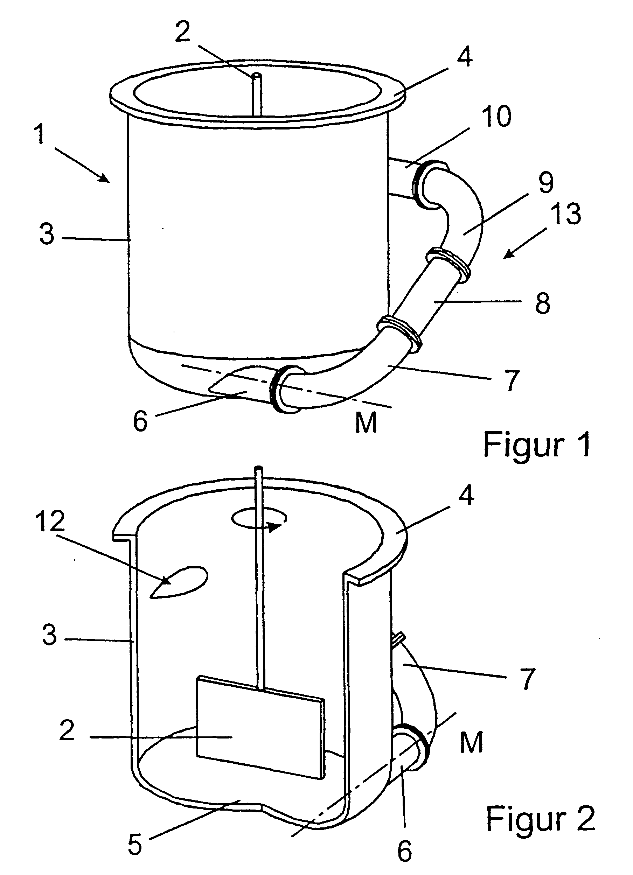

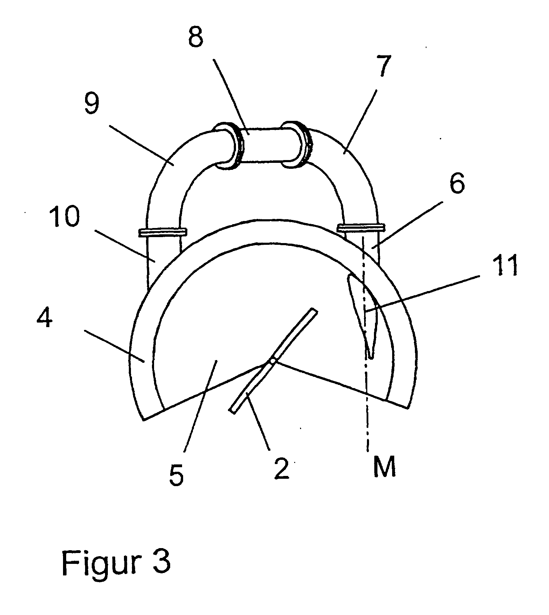

In den Figuren 1 bis 3 ist ein Rührbehälter 1 mit einem zentral angeordneten Rührer 2 dargestellt. In die Mantelfläche bzw. die Wand 3 des Behälters 1, die sich vom oberen Rand 4 bis zu dem ebenen Boden 5 erstreckt, ist ein Rohrstück 6 tangential eingebunden, z.B. durch Schweißen oder Kleben. In den vorgenannten Figuren ist das Rohrstück 6 im gewölbten Bereich der Mantelfläche 3 angeordnet, um im Betriebszustand noch einen zusätzlichen Spüleffekt im Bodenbereich zu bewirken. Das tangential angeordnete Rohrstück 6 kann selbstverständlich, in Abhängigkeit von den Prozeßbedingungen, an einer anderen Stelle der Mantelfläche 3 angeordnet sein. Die Einbindung des nach außen wegführenden Rohrstückes 6 erfolgt so, daß dessen Mittelachse M die gleiche Richtung aufweist wie die im Betriebszustand entstehende Tangentialgeschwindigkeitskomponente des Rührgutes. An das tangentiale Rohrstück 6 ist ein bogenförmiges Rohrstück 7 angeflanscht, an das ein austauschbares Zwischenstück 8 angeschlossen ist, das mit einem zweiten bogenförmigen Rohrstück 9 verbunden ist, an das ein weiteres Rohrstück 10 angeflanscht ist, das an einer anderen Stelle der Mantelfläche in die Behälterwand 3 eingebunden ist. Wie in den Figuren 1 bis 3 verdeutlicht, erstreckt sich die Kreislaufleitung 13 von der Austrittsöffnung bzw. Abführungsstelle 11 (Figur 3) bis zur höher gelegenen Eintrittsöffnung bzw. Rückführungsstelle 12 (Figur 2) nur über einen Teilbereich der Mantelfläche 3 des Behälters 1. Die Rückführungsstelle 12 muß so ausgerichtet sein, daß der Stoffstrom nicht entgegengesetzt zur Tangentialgeschwindigkeitskomponente im Rührbehälter gerichtet ist. Das Zwischenstück 8 kann durch ein entsprechendes Bauteil mit zusätzlichen Funktionen ausgetauscht werden, z.B. durch ein Rohrstück mit einem integrierten statischen Mischer oder ein Drosselorgan oder Meß- und Überwachungseinrichtungen für stoffliche und/oder verfahrenstechnische Parameter. Das Zwischenstück 8 kann auch als T-Stück ausgebildet sein, wenn es erforderlich ist, eine weitere Komponente einzutragen. In einem solchen Fall kann die Anordnung eines statischen Mischers in diesem zweckmäßig sein.

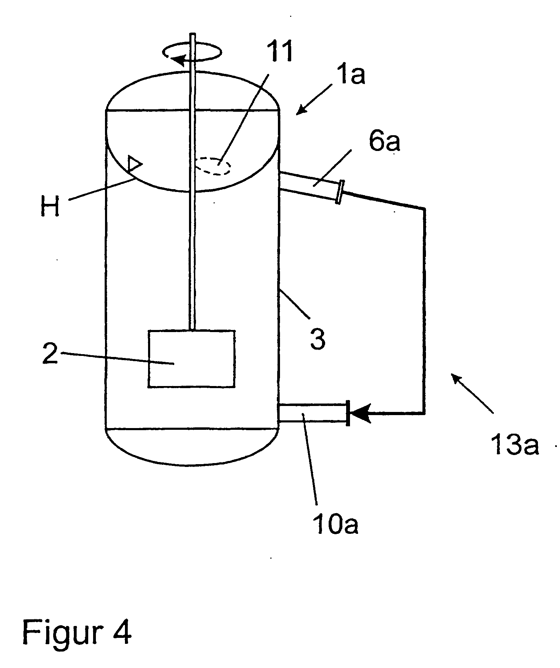

Der in Figur 4 gezeigte geschlossene Rührbehälter 1a ist z.B. für einen solchen Anwendungsfall bestimmt, wenn leichtere Teilchen in eine Flüssigkeit eingemischt werden sollen. Der eingebaute tangentiale Rohrstutzen 6a, der die Abführungsstelle für die auszukreisende Teilmenge bildet, befindet sich unterhalb des Flüssigkeitsspiegels H. Ausgehend von der angegebenen Drehrichtung des Rührers 2 werden die Teilchen infolge der Tangentialgeschwindigkeitskomponente der im Rührbehälter 1a befindlichen Flüssigkeit mit der Strömung durch den Rohrstutzen 6a ausgetragen und gelangen über die nicht weiter dargestellte Kreislaufleitung 13a in der gezeigten Pfeilrichtung in den unteren Rohrstutzen 10a, der radial zur Behältermittelachse angeordnet ist. Die Kreislaufleitung 13a ist so dimensioniert, daß die Steiggeschwindigkeit der Teilchen kleiner ist als die mittlere Strömungsgeschwindigkeit in der Leitung 13a. Infolge der radialen Anordnung des unteren Rohrstutzens 10a, werden die Teilchen in Richtung zur Behälterachse bewegt und durch die im Behälter wirkende Zentrifugalkraft nicht sofort wieder an die Behälterwand gelenkt.

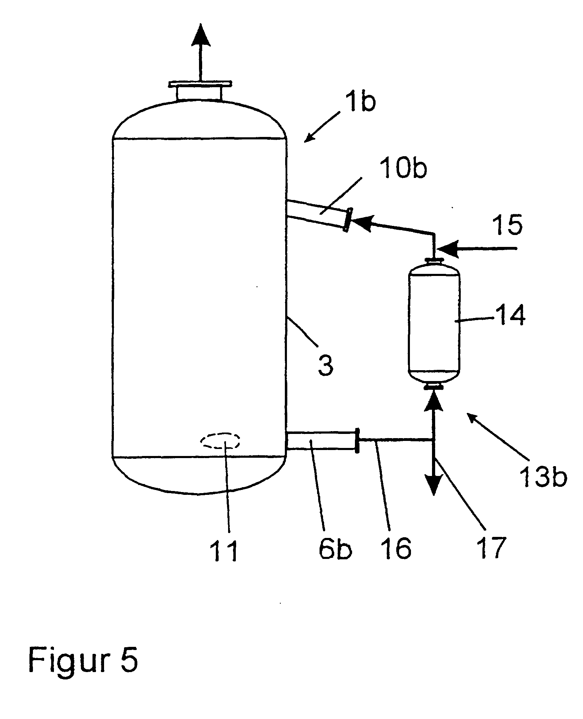

In der Figur 5 ist ein Rührbehälter gezeigt, bei dem in die Kreislaufleitung 13b ein Wärmeübertrager 14 zur Verdampfungskristallisation eingebunden ist. Bei diesem Prozeß wird eine aufkonzentrierte Mutterlauge eingedampft. Dabei wird das Lösungsmittel durch Verdampfung entzogen und es entstehen Kristalle. Ziel des Prozesses ist die Gewinnung möglichst großer Kristalle. Es ist daher erforderlich, das erzeugte Kristall schonend zu behandeln. Die Kreislaufführung erfolgt analog wie bei der in den Figuren 1 bis 3 gezeigten Variante von unten nach oben. Im Rührbehälter 1b wird die Mutterlauge durch einen nicht näher dargestellten Blattrührer in eine vorrangig tangentiale Bewegung versetzt und gelangt über die Austrittsöffnung 11 des in Bodennähe in der Behälterwand 3 eingebundenen tangential angeordneten Rohrstutzen 6b sowie über ein nicht näher dargestelltes Zwischenstück in den Wärmeübertrager 14. In diesem wird die Temperatur der Mutterlauge um einige Grad erhöht. In dem Teil der Kreislaufleitung 13b, der mit dem oberen Rohrstutzen 10b und dem Wärmeübertrager 14 verbunden ist, ist eine Zuführungsleitung 15, die als Pfeil gekennzeichnet ist, eingebunden, über die frische Mutterlauge in den Kreislauf eingetragen wird, mittels einer gesonderten Pumpe. In die mit dem tangentialen Stutzen 6b verbundene Leitung 16 ist eine weitere Leitung 17 eingebunden, über die eine Teilmenge an Mutterlauge ausgekreist und einer Zentrifuge zugeführt wird. Von Vorteil ist, daß für die Auskreisung dieser Teilmenge keine Pumpe benötigt wird, da der Transport zur Zentrifuge über die vorhandene Staudruckdifferenz zwischen den beiden Verbindungsstellen im Behälter, der Abführungs- und Rückführungsstelle, erfolgt. Der Stoffkreislauf über den Wärmeübertrager erfolgt ebenfalls ausschließlich infolge der vorhandenen Staudruckdifferenz. Die erfindungsgemäße Lösung führt speziell bei diesem Prozeß zu einer besonders schonenden Behandlung der Kristalle. Die Rotationsbewegung des Behältergutes wird im Wesentlichen durch die Kreislaufströmung aufrechterhalten. Die Drehzahl des Rührers kann somit erheblich reduziert werden, wodurch einerseits eine unerwünschter Abrieb der Kristalle verhindert wird und andererseits eine energiesparende Betriebsweise ermöglicht wird.

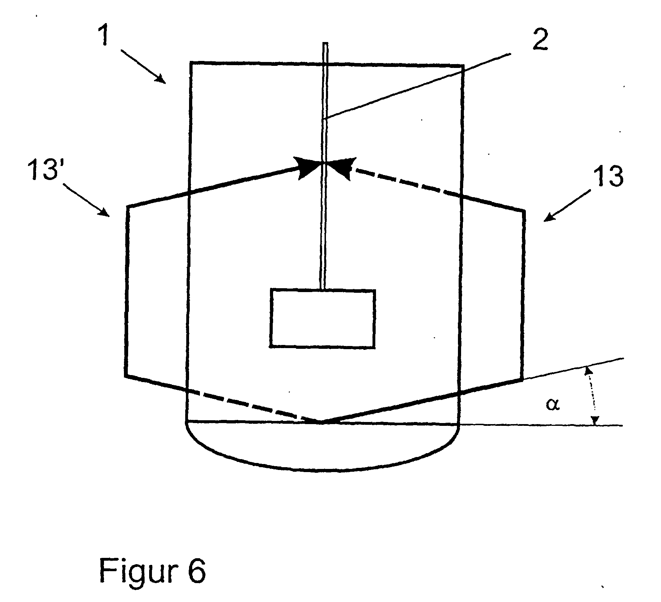

In Figur 6 ist als Funktionsschaltbild in vereinfachter Form einer Ausführungsvariante dargestellt, bei der aus dem Rührbehälter 1 mehrere Teilstrommengen über separate Kreislaufleitungen 13 und 13' aus dem Behälter abgeführt und wieder in diesen zurückgeführt werden, ohne zusätzlichen Energieeintrag. Die Stoffkreisläufe erfolgen ausschließlich infolge der vorhandenen Staudruckdifferenz. Über die beiden Kreislaufleitungen 13 und 13' werden zwei getrennte Teilstrommengen aus dem Behälter 1 in Bodennähe abgeführt und im oberen Teil des Behälters in diesen wieder zurückgeführt. Im Unterschied zu der in den Figuren 1 bis 3 gezeigten Ausführungsvariante sind die tangentialen, nach außen wegführenden Leitungen bzw. Anschlüsse, in ihrer Mittelachse nicht identisch mit der Richtung der Tangentialgeschwindigkeitskomponente angeordnet, sondern in einer um den Winkel α geneigten Lage. Die Mittelachse der jeweiligen tangentialen Rohrstücke weicht also um den Winkel α von der Richtung der Tangentialgeschwindigkeitskomponente ab. Der Vorteil dieser Variante besteht noch darin, daß die Kreislaufleitungen je nach Bedarf wahlweise abschaltbar sind. Ansonsten unterscheidet sich diese Ausführungsvariante nicht weiter von der in den Figuren 1 bis 3 gezeigten Variante.

Im folgenden soll noch kurz auf zwei weitere Einsatzmöglichkeiten der Erfindung hingewiesen werden.

### Mischprozesse

Der einfachste Anwendungsbereich ist die Mischung von Fluiden mit weiteren festen oder gasförmigen Phasen. Auch wenn Wärme- und Stoffaustauschprozesse fehlen, hat diese Verfahrensweise ihre Vorteile. An erster Stelle soll auf die Einsparung von Energie hingewiesen werden. Die Flüssigkeit kann bis an die obere Schicht des Behälters durch die äußere Leitung geführt werden. Es kommt nicht zur Vermischung mit umgebendem Fluid und damit zur Abbremsung wie bei der Strömung im Behälter. Die aufwärts zu fördernde Menge kann nach der Sinkgeschwindigkeit der Partikel in der Suspension bestimmt werden. Im Gegensatz zur axialen Förderung der Flüssigkeit im Leitrohr kann auch eine Quervermischung durch die frei wählbare Stelle der Zuführung in den Apparat realisiert werden. Insbesondere bei großen und hohen Behältern wirkt sich das Verfahren günstig aus. Anwendungsmöglichkeiten bestehen z.B. bei der Rauchgasreinigung. Im Sumpf muß eine Kalksuspension gerührt werden, damit sich Konzentrationsunterschiede ausgleichen können. Dabei werden gegenwärtig erhebliche Menge an Energie für die Mischung verwendet, da die Behälter sehr groß und hoch sind.

### Reaktoren (auch Bioreaktoren)

In Mehrphasenreaktoren sind häufig suspendierte Partikel enthalten. Diese Partikel müssen häufig schonend behandelt werden. Es kann sich dabei in Bioreaktoren um lebende Organismen handeln oder in chemischen Reaktoren um Katalysatorteilchen. Ein Abrieb wird als schädlich angesehen, da Standzeit und Wirksamkeit des Katalysators beeinträchtigt werden. Trotzdem soll eine gute Durchmischung im Reaktor erfolgen, der beispielsweise bei Bioreaktoren (Fermenter) beträchtliche Ausmaße annehmen kann. Die geringe Scherwirkung von Blattrührem gegenüber Propellerrührern ist bekannt. Die Blattrührer verursachen aber in effektiver Weise eine Rotationsströmung, die für den axialen Transport der Flüssigkeit genutzt werden kann. Durch das erfindungsgemäße Verfahren wird daher die Möglichkeit einer mechanisch schonenden Umwälzung ermöglicht.

## Patentansprüche

1. Verfahren zur Behandlung von in einem Behälter, insbesondere durch Misch- oder Rührvorgänge, in Rotation um die Behälterachse befindlichem fluiden Stoff oder Stoffgemisch mit festen oder fluiden Stoffen, wobei im Behälter befindliche Stoffe in Richtung ihrer tangentialen Geschwindigkeitskomponente an einer Stelle am Außenumfang des Behälters aus diesem abgeführt und im Kreislauf an einer anderen Stelle des Behälters in einer Strömungsrichtung, die nicht der Tangentialgeschwindigkeitskomponente der im Behälter befindlichen Stoffe an der Zuführungsstelle entgegengesetzt gerichtet ist, in diesen zurückgeführt werden, **dadurch gekennzeichnet, daß** die Staudruckdifferenz zwischen der Abführungsstelle und der Rückführungsstelle im Behälter zum Transport der im Kreislauf geführten Stoffe ausgenutzt wird, und sich die Staudruckdifferenz im Wesentlichen aus der an der Abführungsstelle wirksam werdenden Tangentialgeschwindigkeitskomponente ergibt.

2. Verfahren nach Anspruch 1, **dadurch gekennzeichnet, daß** die ausgekreisten Stoffe von oben nach unten und/oder von unten nach oben geführt werden oder in gleicher axialer Höhe ab- und zugeführt werden.

3. Verfahren nach einem der Ansprüche 1 oder 2, **dadurch gekennzeichnet, daß** die auszukreisenden Stoffe auf mehrere separate Kreisläufe verteilt werden.

4. Verfahren nach einem der Ansprüche 1 bis 3, **dadurch gekennzeichnet, daß** in einem oder in mehreren Kreisläufen wahlweise fluide Stoffe zu- oder abgeführt werden.

5. Verfahren nach einem der Ansprüche 1 bis 4, **dadurch gekennzeichnet, daß** die jeweilige Kreislaufmenge mittels eines Drosselorgans oder durch eine Änderung der Drehzahl des jeweiligen Misch- oder Rührorgans oder durch Veränderung der Geometrie des Rührorgans im Betriebszustand eingestellt wird.

6. Verfahren nach einem der Ansprüche 1 bis 5, **dadurch gekennzeichnet, daß** die jeweilige Kreislaufmenge im Bereich der Mantelfläche des Behälters wieder in diesen zurückgeführt wird.

7. Verfahren nach einem der Ansprüche 1 bis 6, **dadurch gekennzeichnet, daß** der Förderstrom im Kreislauf durch Wärme- oder Gaszuführung beeinflußt wird.

8. Verfahren nach einem der Ansprüche 1 bis 7, **dadurch gekennzeichnet, daß** der im Kreislauf geführte Stoffstrom in radialer Richtung zur Behälterachse in den Behälter zurückgeführt wird.

9. Verfahren nach einem der Ansprüche 1 bis 8, **dadurch gekennzeichnet, daß** der im Kreislauf geführte Stoffstrom in Richtung der Tangentialgeschwindigkeitskomponente der im Behälter befindlichen Stoffe in diesen zurückgeführt wird.

10. Vorrichtung zur Durchführung des Verfahrens nach Anspruch 1, bestehend aus einem Behälter mit einem inneren, rotierbaren Misch- oder Rührorgan und/oder einer separaten Einleitung eines fluiden Stoffes zur Erzeugung der Rotationsbewegung des im Behälter befindlichen fluiden Stoffes, **dadurch gekennzeichnet, daß** in die Behälterwand (3) des Behälters (1, 1a, 1b) eine tangential, von der Behälterwand nach außen wegführende Leitung (13, 13a, 13b, 13') eingebunden ist, wobei die Mittelachse (M) des Anschlusses (6, 6a, 6b) die gleiche Richtung wie die Tangentialgeschwindigkeitskomponente des Misch- oder Rührgutes oder eine zu dieser leicht geneigte Richtung aufweist, und die Leitung (13, 13a, 13b, 13') sich über einen Teilbereich der Mantelfläche des Behälters (1, 1a, 1b) erstreckt und an einer anderen Stelle des Behälters (1, 1a, 1b) so in diesen eingebunden ist, daß die Einlaufrichtung nicht der Tangentialgeschwindigkeitskomponente des Misch- oder Rührgutes entgegengesetzt gerichtet ist, und durch die Anordnung der äußeren Leitung (13, 13a, 13b, 13') im Betriebszustand, infolge der Staudruckdifferenz zwischen den beiden Leitungsanschlüssen (6, 6a, 6b und 10, 10a, 10b), in dem Behälter (1, 1a, 1b) ein selbsttätiger Stoffkreislauf gebildet ist.

11. Vorrichtung nach Anspruch 10 **dadurch gekennzeichnet, daß** die Leitung (13, 13a, 13b, 13') aus mehreren zusammensetzbaren Teilstücken (6, 6a, 6b, 7, 8, 9, 10, 10a, 10b) gebildet ist, wobei das tangentiale Anschlußstück (6, 6a, 6b) für die Abführung des Mischgutes oberhalb oder unterhalb des Anschlußstückes (10, 10a, 10b) für die Rückführung des Mischgutes in dem Behälter (1, 1a, 1b) angeordnet ist.

12. Vorrichtung nach einem der Ansprüche 10 oder 11, **dadurch gekennzeichnet, daß** in die Leitung (13, 13a, 13b, 13') als verfahrensprozeßbedingte Einbauten einzeln oder in Kombination ein Wärmeübertrager (14), ein statischer Mischer, ein Zyklon, eine Ultraschallvorrichtung, eine Bestrahlungsvorrichtung, ein Drosselorgan, eine Meß- oder Überwachungseinrichtung eingebunden sind.

13. Vorrichtung nach einem der Ansprüche 10 bis 12, **dadurch gekennzeichnet, daß** der Behälter (1, 1a, 1b) mit mehreren Kreislaufleitungen (13, 13') verbunden ist, die wahlweise zu- oder abschaltbar sind.

14. Vorrichtung nach einem der Ansprüche 10 bis 13, **dadurch gekennzeichnet, daß** der Anschluß (10, 10a, 10b) für die Rückführung des ausgekreisten Stoffes unterhalb des Behälterfüllstandsspiegels (H) und in Richtung zur Behälterachse oder in Richtung der Tangentialgeschwindigkeitskomponente des Behältergutes zeigend angeordnet ist.

15. Vorrichtung nach einem der Ansprüche 10 bis 14, **dadurch gekennzeichnet, daß** in die Behälterwand eine oder mehrere, tangential angeordnete Zuführungsleitungen eingebunden sind, die an den Eintrittsstellen in den Behälter in ihrer Größe gleiche oder unterschiedliche Querschnittsflächen aufweisen, mindestens eine der Zuführungsleitungen mit einem Regelorgan zur Veränderung der Durchflußmenge ausgerüstet ist und die einzelnen Zuführungsleitungen mit einer gemeinsamen Leitung verbunden sind.

## Claims

1. Procedure for the treatment of a fluid substance or a mixture of a fluid with solid particles or other fluids in a container, particularly by mixing or agitating, whereby the fluid substance or a mixture of a fluid is in rotation around the container axis, whereby the substances from the container are discharged toward their tangential velocity component at a position at the outer circumference of the container and are fed in the container after a bypass circulation in another position of the container in such a flow direction, which is not opposite to the tangential velocity component of the inner substance at the feedback position, **characterized by** the fact, that the dynamic pressure difference between the discharge position and the feedback position in the container is used for the transport of the substances led in the bypass circulation, whereby the dynamic pressure difference consists essentially in the tangential velocity component which exists at the discharge position.

2. Procedure according to claim 1, **characterized by** the fact that the substances in the bypass circulation are led from above downward and/or from down upward or are discharge off and are fed in the container in same axial height.

3. Procedure according to one of claim 1 or 2, **characterized by** the fact that the substances are distributed on several separate circulations.

4. Procedure according to one of claims 1 to 3, **characterized by** the fact that in one or in several circulations alternatively fluid substances are added or discharged.

5. Procedure according to one of claims 1 to 4, **characterized by** the fact that the respective circulation quantity is controlled by means of a throttle device or by a change of the number of revolutions of the mixing or agitating device or by change of geometry of the agitating device in the operating condition.

6. Procedure according to one of claims 1 to 5, **characterized by** the fact that the respective circulation quantity is fed back into the container in the range of the outer surface of the container.

7. Procedure according to one of claims 1 to 6, **characterized by** the fact that the delivered flow in the bypass circulation is affected by heat transfer or gas feed in.

8. Procedure according to one of claims 1 to 7, **characterized by** the fact that the flow led in the bypass circulation is led back to the container in radial direction to the axis of the container.

9. Procedure according to one of claims 1 to 8, **characterized by** the fact that the flow led in the bypass circulation is led back to the container toward the tangential velocity component of the inner flow of the container.

10. Device for the execution of the procedure according to claim 1, consisting of a container with an internal, rotatable mixing or agitating device and/or a separate inlet for fluids for the generation of the rotational motion of the fluid existing in the container, **characterized by** the fact that in the container wall (3) of the container (1, 1a, 1b) is arranged a pipeline (13, 13a, 13b, 13'),which leads tangentially away from the container, whereby the centre axis (M) of the connection (6, 6a, 6b) has the same direction as the tangential velocity component of the mixed or agitated substance or has a slightly different direction to this direction, and the pipeline (13, 13b, 13b, 13'), which is extended over a sub range of the outer surface of the container (1, 1a, 1b), is connected in another position of the container (1, 1a, 1b) with the container so, that the inlet direction is not arranged opposite to the tangential velocity component of the mixed or agitated substance, and by the arrangement of the outer pipeline (13, 13a, 13b, 13') in the operating condition, due to the dynamic pressure difference between the two pipeline connections (6, 6a, 6b and 10, 10a, 10b), in the container (1, 1a, 1b) is formed an automatic material bypass circulation.

11. Device according to claim 10, **characterized by** the fact that the pipeline (13, 13a, 13b, 13') is formed from several sections (6, 6a, 6b, 7, 8, 9, 10, 10a, 10b), whereby the tangential connection (6, 6a, 6b) for the discharge of the mixed substance is arranged above or underneath the connection (10, 10a, 10b) for the feedback of the mixed substance in the container (1, 1a, 1b).

12. Device according to one of claims 10 or 11, **characterized by** the fact that as process-conditioned installations individually or in combination a heat exchanger (14), a static mixer, a cyclone, an ultrasonic device, an irradiation device, a throttling device, a measuring or control device are involved in the pipeline (13, 13a, 13b, 13').

13. Device according to one of claims 10 or 12, **characterized by** the fact that the container (1, 1a, 1b) is connected with several circulation pipelines (13, 13'), which can alternatively be used or not.

14. Device according to one of claims 10 or 13, **characterized by** the fact that the connection (10, 10a, 10b) for the feedback of the circulated substance is arranged underneath the fluid level (H) in the container and toward to the container axis or toward the tangential velocity component of the agitated substance.

15. Device according to one of claims 10 or 14, **characterized by** the fact that the container wall is connected with one or more tangential arranged feed pipelines, which have at the inlets into the container the same or different cross-section areas, at least one of the feed pipelines is equipped with a control device for the change of the flow rate and the individual feed pipelines are connected with one pipeline.

## Revendications

1. Procédé de traitement d'une substance fluide étant en rotation dans un récipient autour de l'axe de celui-ci, notamment grâce à des opérations de mélange ou d'agitation, ou d'un mélange de substances solides ou fluides, des substances se trouvant dans le récipient étant évacuées de celui-ci dans le sens de leur composante de vitesse tangentielle en un point situé sur le pourtour extérieur du récipient et étant ramenées à l'intérieur de celui-ci, dans le circuit, en un autre point du récipient dans un sens d'écoulement dont l'orientation n'est pas opposée à la composante de vitesse tangentielle au point d'amenée des substances se trouvant dans le récipient, **caractérisé en ce que** la différence de pression dynamique entre le point d'évacuation et le point de retour est utilisée dans le récipient pour le transport des substances parcourant le circuit, et que la différence de pression dynamique résulte essentiellement de la composante de vitesse tangentielle agissant au point d'évacuation.

2. Procédé selon la revendication 1, **caractérisé en ce que** les substances isolées sont amenées et évacuées du haut vers le bas et/ou du bas vers le haut ou à la même hauteur axiale.

3. Procédé selon l'une des revendications 1 ou 2, **caractérisé en ce que** les substances devant être isolées sont réparties sur plusieurs circuits séparés.

4. Procédé selon l'une des revendications 1 à 3, **caractérisé en ce que,** dans un ou plusieurs circuits, des substances fluides sont, au choix, soit amenées soit évacuées.

5. Procédé selon l'une des revendications 1 à 4, **caractérisé en ce que** la quantité transportée dans le circuit respectif est réglée, pendant le fonctionnement, au moyen d'un organe d'étranglement ou en modificant la vitesse de rotation de l'organe de mélange ou d'agitation respectif ou en modifiant la géométrie de l'organe d'agitation.

6. Procédé selon l'une des revendications 1 à 5, **caractérisé en ce que** la quantité transportée dans le circuit respectif est ramenée dans le récipient dans le domaine de la surface enveloppant celui-ci.

7. Procédé selon l'une des revendications 1 à 6, **caractérisé en ce que** le débit est influencé dans le circuit par apport thermique ou par apport gazeux.

8. Procédé selon l'une des revendications 1 à 7, **caractérisé en ce que** le courant de substances parcourant le circuit est ramené dans le récipient dans le sens radial par rapport à l'axe du récipient.

9. Procédé selon l'une des revendications 1 à 8, **caractérisé en ce que** le courant de substances parcourant le circuit est ramené dans le récipient dans le sens de la composante de vitesse tangentielle des substances se trouvant dans le récipient.

10. Dispositif pour la mise en oeuvre du procédé selon la revendication 1, se composant d'un récipient muni d'un organe de mélange ou d'agitation interne susceptible de tourner et/ou d'une introduction séparée d'une substance fluide destinée à générer la rotation de la substance fluide se trouvant dans le récipient, **caractérisé en ce qu'**une conduite (13, 13a, 13b, 13') menant tangentiellement vers l'extérieur par rapport à la paroi du récipient est intégrée dans la paroi de récipient (3) du récipient (1, 1a, 1b), l'axe médian (M) du raccord (6, 6a, 6b) présentant le même sens que la composante de vitesse tangentielle de la matière mélangée ou agitée ou un sens incliné légèrement vers celle-ci, et que la conduite (13, 13a, 13b, 13') s'étire sur une partie de la surface enveloppant le récipient (1, 1a, 1b) et est intégrée dans le récipient (1, 1a, 1b) en un autre point de celui-ci de sorte que l'orientation du sens d'arrivée n'est pas opposée à la composante de vitesse tangentielle de la matière mélangée ou agitée, et qu'un circuit de substances automatique est formé, pendant le fonctionnement, dans le récipient (1, 1a, 1b) grâce à la disposition de la conduite externe (13, 13a, 13b, 13') suite à la différence de pression dynamique entre les deux raccords de conduite (6, 6a, 6b et 10, 10a, 10b).

11. Dispositif selon la revendication 10, **caractérisé en ce que** la conduite (13, 13a, 13b, 13') est formée par plusieurs segments démontables (6, 6a, 6b, 7, 8, 9, 10a, 10b), le manchon de raccordement tangentiel (6, 6a, 6b) pour l'évacuation de la matière mélangée étant disposé dans le récipient (1, 1a, 1b) au-dessus ou en dessous du manchon de raccordement (10, 10a, 10b) pour le retour de la matière mélangée.

12. Dispositif selon l'une des revendications 10 ou 11, **caractérisé en ce qu'**un échangeur de chaleur (14), un mélangeur statique, un séparateur à cyclone, un dispositif à ultrasons, un dispositif d'irradiation, un organe d'étranglement, un dispositif de surveillance ou de mesure sont intégrés dans la conduite (13, 13a, 13b, 13') en tant qu'éléments encastrés inhérents au procédé.

13. Dispositif selon l'une des revendications 10 à 12, **caractérisé en ce que** le récipient (1, 1a, 1b) est relié à plusieurs conduites de circuit (13, 13') qui peuvent être, au choix, soit raccordées soit enlevées.

14. Dispositif selon l'une des revendications 10 à 13, **caractérisé en ce que** le raccord (10, 10a, 10b) pour le retour de la substance isolée est disposé en dessous du niveau de remplissage du récipient (H) et en étant orienté en direction de l'axe du récipient ou en direction de la composante de vitesse tangentielle de la matière contenue dans le récipient.

15. Dispositif selon l'une des revendications 10 à 14, **caractérisé en ce qu'**une ou plusieurs conduites d'amenée disposées tangentiellement sont intégrées dans la paroi du récipient, conduites présentant aux points d'arrivée dans le récipient des aires de section de taille égale ou de taille différente, qu'au moins l'une des conduites d'amenée est équipée d'un organe de réglage destiné à modifier le débit d'écoulement et que chacune des conduites d'amenée est reliée à une conduite commune.
